# EUROPEAN PATENT APPLICATION

(11) **EP 4 254 191 A1**
(43) Date of publication of application: **04.10.2023**
(21) Application number: 23164381.8
(22) Date of filing: 27.03.2023
(51) Int. Cl.: G06F 11/07, G06F 11/14

(54) **METHOD AND APPARATUS OF IMPLEMENTING HIGH AVAILABILITY OF CLUSTER VIRTUAL MACHINE**

(30) Priority: 28.03.2022 CN 202210316175; 10.05.2022 CN 202210511479
(71) Applicant: Nuctech Company Limited, TongFang Building Shuangqinglu Road Haidian District Beijing 100084 (CN)
(72) Inventor: CHEN, Zhiqing, Beijing, 100084 (CN); ZHANG, Li, Beijing, 100084 (CN); ZHANG, Yizhong, Beijing, 100084 (CN); TANG, Hu, Beijing, 100084 (CN); LI, Xi, Beijing, 100084 (CN); SONG, Runkun, Beijing, 100084 (CN); YU, Dazhao, Beijing, 100084 (CN); WANG, Ting, Beijing, 100084 (CN)
(74) Representative: Gunzelmann, Rainer

(57) **Abstract**

Provided is a method and an apparatus (800) of implementing a high availability of a cluster virtual machine. The method includes: detecting (S 110) a state of at least one virtual machine in a cluster; acquiring (S 120), in response to the at least one virtual machine being in an abnormal state, a high availability recovery strategy specific to the at least one virtual machine; and performing (S130) a recovery operation on the at least one virtual machine according to the acquired high availability recovery strategy specific to the at least one virtual machine.

## Description

### TECHNICAL FIELD

The present disclosure relates to a field of a cloud computing technology, and in particular, to a method and an apparatus of implementing a high availability of a cluster virtual machine, an electronic device, a computer-readable storage medium and a program product.

### BACKGROUND

With a continuous rise of a cloud computing industry, OpenStack has been widely used in all walks of life, and has gradually become a mainstream virtual machine management software for major companies. However, the OpenStack itself does not have a complete set of high availability solutions for a virtual machine. When the virtual machine is faulty, the virtual machine may not recover itself without a human intervention, resulting in an unavailability of an application running on the virtual machine and affecting an entire cloud business.

Therefore, it is of great significance to study a system of implementing a high availability of a cluster virtual machine based on the OpenStack to ensure a high availability of a cloud application.

The above-mentioned information disclosed in the section is only used to understand the background of the inventive concept of the present disclosure. Therefore, the above-mentioned information may include an information that does not constitute the prior art.

### SUMMARY

In view of at least one aspect of the above-mentioned technical problems, a method and an apparatus of implementing a high availability of a cluster virtual machine, an electronic device, a computer-readable storage medium and a program product are provided.

In an aspect, a method of implementing a high availability of a cluster virtual machine is provided, including:
detecting a state of at least one virtual machine in a cluster;
acquiring, in response to the at least one virtual machine being in an abnormal state, a high availability recovery strategy specific to the at least one virtual machine; and
performing a recovery operation on the at least one virtual machine according to the acquired high availability recovery strategy specific to the at least one virtual machine.

According to some exemplary embodiments, the high availability recovery strategy includes at least one of a first high availability recovery strategy and a second high availability recovery strategy, and the first high availability recovery strategy is a restart/start strategy, and the second high availability recovery strategy is a rebuilding strategy.

According to some exemplary embodiments, the performing, in response to the high availability recovery strategy specific to the at least one virtual machine being the first high availability recovery strategy, the recovery operation on the at least one virtual machine includes:
detecting a state of a host machine in which the at least one virtual machine is located;
detecting a state of a physical volume in which the at least one virtual machine is located; and
restarting or starting, in response to the state of the host machine and the state of the physical volume being normal, the at least one virtual machine.

According to some exemplary embodiments, the performing, in response to the high availability recovery strategy specific to the at least one virtual machine being the second high availability recovery strategy, the recovery operation on the at least one virtual machine includes:
detecting a state of a physical volume in which the at least one virtual machine is located;
detecting a state of a host machine in which the at least one virtual machine is located; and
building, in response to the state of the host machine and the state of the physical volume being normal, the at least one virtual machine on the host machine in which the at least one virtual machine is located.

According to some exemplary embodiments, the high availability recovery strategy further includes a third high availability recovery strategy, and the performing, in response to the high availability recovery strategy specific to the at least one virtual machine being the third high availability recovery strategy, the recovery operation on the at least one virtual machine includes:
detecting a state of a host machine in which the at least one virtual machine is located;
detecting a state of a physical volume in which the at least one virtual machine is located;
restarting or starting, in response to the state of the host machine and the state of the physical volume being normal, the at least one virtual machine; and
rebuilding, in response to failing to restart or start the at least one virtual machine failing, the at least one virtual machine on the host machine in which the at least one virtual machine is located

According to some exemplary embodiments, the performing, in response to the high availability recovery strategy specific to the at least one virtual machine being the second high availability recovery strategy, the recovery operation on the at least one virtual machine further includes:
determining whether the state of at least one virtual machine is restored to normal;
rebuilding, in response to determining that the state of the at least one virtual machine is not restored to normal, the at least one virtual machine on another host machine, wherein the another host machine is in a same available domain as the host machine in which the at least one virtual machine is located.

According to some exemplary embodiments, the performing, in response to the high availability recovery strategy specific to the at least one virtual machine being the second high availability recovery strategy, the recovery operation on the at least one virtual machine further includes:
rebuilding, in response to the state of the host machine in which the at least one virtual machine is located being abnormal, the at least one virtual machine on another host machine, wherein the another host machine is in a same available domain as the host machine in which the at least one virtual machine is located.

According to some exemplary embodiments, the rebuilding the at least one virtual machine on another host machine includes:
sequentially traversing other host machines in the same available domain as the host machine in which the at least one virtual machine is located, until the at least one virtual machine is successfully rebuilt on one of the other host machines in the same available domain.

According to some exemplary embodiments, the performing, in response to the high availability recovery strategy specific to the at least one virtual machine being the first high availability recovery strategy, the recovery operation on the at least one virtual machine further includes:
determining whether the state of at least one virtual machine is restored to normal; and
updating a high availability task queue according to a result of the determination.

According to some exemplary embodiments, the high availability task queue includes an error task queue, and the error task queue includes a queue of virtual machines with a failure of a high availability recovery, and
the updating a high availability task queue according to a result of the determination includes:
adding, in response to the state of the at least one virtual machine being not restored to normal, the at least one virtual machine to the error task queue.

According to some exemplary embodiments, the high availability task queue further includes a running task queue, and the running task queue includes a queue of virtual machines currently running or waiting to run a high availability recovery operation, and
the updating a high availability task queue according to a result of the determination includes:

removing, in response to the state of the at least one virtual machine being restored to normal, the at least one virtual machine from the running task queue.

According to some exemplary embodiments, the high availability recovery strategy further includes a fourth high availability recovery strategy, and the fourth high availability recovery strategy is an ignore strategy, and
the method further includes:
not performing, in response to the high availability recovery strategy specific to the at least one virtual machine being the fourth high availability recovery strategy, the recovery operation on the at least one virtual machine

According to some exemplary embodiments, the high availability task queue further includes an ignore task queue, and the ignore task queue includes a queue of virtual machines with the specific high availability recovery strategy configured as the fourth high availability recovery strategy, and
the method further includes: before the detecting a state of at least one virtual machine in a cluster,
determining whether the at least one virtual machine is in at least one of the running task queue, the error task queue and the ignore task queue.

According to some exemplary embodiments, the detecting a state of at least one virtual machine in a cluster includes:
regularly detecting, by a timer, the state of the at least one virtual machine in the cluster at a predetermined time interval.

According to some exemplary embodiments, the timer includes a detection parameter, and the detection parameter is configured to characterize a detection state, and
the detecting a state of at least one virtual machine in a cluster includes:
determining whether a previous round of detection is completed according to the detection parameter;
suspending, in response to the previous round of detection being not completed, a current round of detection; and
starting, in response to the previous round of detection being completed, the current round of detection.

According to some exemplary embodiments, the method further includes:
adding, in response to another application existing in the cluster to operate the at least one virtual machine, the at least one virtual machine to a high availability white list, wherein the virtual machine in the high availability white list is temporarily configured as a fourth high availability recovery strategy; and
removing, in response to the another application in the cluster completing the operation on the at least one virtual machine, the at least one virtual machine from the high availability white list.

According to some exemplary embodiments, the method further includes:
removing, in response to a duration of an existence of the at least one virtual machine in an error task queue reaching a specified duration, the at least one virtual machine from the error task queue.

According to some exemplary embodiments, the method further includes:
setting, in response to the state of the physical volume in which the at least one virtual machine is located being abnormal, the at least one virtual machine to be in a volume abnormal state; and
performing, in response to the state of the physical volume in which the at least one virtual machine is located being restored from abnormal to normal, the recovery operation on the at least one virtual machine again.

According to some exemplary embodiments, the method further includes:
removing, in response to successfully performing the recovery operation on the at least one virtual machine again, the volume abnormal state of the at least one virtual machine; and
setting, in response to failing to perform the recovery operation on the at least one virtual machine again, the at least one virtual machine to be in a volume damage state.

According to some exemplary embodiments, the method is implemented based on OpenStack.

In another aspect, an apparatus of implementing a high availability of a cluster virtual machine is provided, including:
a state monitoring module configured to detect a state of at least one virtual machine in a cluster;
a recovery strategy acquisition module configured to: acquire, in response to the at least one virtual machine being in an abnormal state, a high availability recovery strategy specific to the at least one virtual machine; and
a recovery operation execution module configured to: perform a recovery operation on the at least one virtual machine according to the acquired high availability recovery strategy specific to the at least one virtual machine.

In yet another aspect, an electronic device is provided, including:
one or more processors; and
a storage apparatus configured to store one or more programs,
wherein the one or more programs, when executed by the one or more processors, are configured to cause the one or more processors to implement the method as described above.

In yet another aspect, a computer-readable storage medium having executable instructions thereon is provided, and the instructions, when executed by a processor, are configured to cause the processor to implement the method as described above.

In yet another aspect, a computer program product including a computer program is provided, and the computer program, when executed by a processor, is configured to cause the processor to implement the method as described above.

In the method according to embodiments of the present disclosure, a recovery strategy for each virtual machine may be configured, and different virtual machines may be recovered differently according to recovery strategies specific to different virtual machines, which may greatly improve the high availability of the cluster virtual machine and ensure a normal operation of an application on the virtual machine.

### BRIEF DESCRIPTION OF THE DRAWINGS

In order to better understand the present disclosure, the present disclosure will be described in detail according to following accompanying drawings:
FIG. 1 shows a flowchart of a method of implementing a high availability of a cluster virtual machine according to some exemplary embodiments of the present disclosure.
FIG. 2 schematically shows a process of detecting a physical volume in a method according to embodiments of the present disclosure.
FIG. 3 schematically shows a schematic diagram of a communication between a computer and a virtual machine.
FIG. 4 shows a flowchart of a recovery operation in a method according to some exemplary embodiments of the present disclosure.
FIG. 5 shows a schematic diagram of a high availability pipeline communication according to some exemplary embodiments of the present disclosure.
FIG. 6 shows a structural block diagram of an apparatus of implementing a high availability of a cluster virtual machine according to exemplary embodiments of the present disclosure.
FIG. 7 schematically shows a structural block diagram of an electronic device suitable for implementing the above-mentioned method according to exemplary embodiments of the present disclosure.

### DETAILED DESCRIPTION OF EMBODIMENTS

Specific embodiments of the present disclosure will be described below in detail. It should be noted that embodiments described here are only for illustration and are not intended to limit the present disclosure. In the following descriptions, in order to provide a thorough understanding of the present disclosure, a large number of specific details are described. However, it is obvious to those skilled in the art that it is not necessary to use these specific details to implement the present disclosure. In other examples, in order to avoid confusion of the present disclosure, well-known structures, materials or methods are not specifically described.

In the entire specification, reference to "an embodiment", "embodiments", "an example" or "examples" means that specific features, structures or characteristics described in combination with the embodiment(s) or example(s) are included in at least one embodiment of the present disclosure. Therefore, terms "in an embodiment", "in embodiments", "an example" or " examples" described in the entire specification do not necessarily refer to the same embodiment or example. In addition, the specific features, structures or characteristics may be combined in one or more embodiments or examples in any suitable combination and/or sub-combination. In addition, those skilled in the art should understand that a term "and/or" used herein includes any and all combinations of one or more related listed items.

Terms used herein are only intended to describe specific embodiments and are not intended to limit the present disclosure. Terms "include", "comprise", "contain", etc. used herein indicate the presence of the described features, steps, operations and/or components, but do not exclude the presence or addition of one or more other features, steps, operations and/or components.

All terms (including technical and scientific terms) used herein have meanings generally understood by those of ordinary skilled in the art, unless otherwise defined. It should be noted that the terms used herein should be interpreted as having the meaning consistent with the context of the present disclosure, and should not be interpreted in an idealized or overly rigid manner.

"High Availability (HA for short)" used herein is a technical term in a distributed system, which usually means to reduce time when the system may not provide a service through a design. For example, assuming that the system may always provide the service, it may be considered that an availability of the system is 100%. If the system runs for every 100 time units, 1 time unit may not provide the service, and thus it may be considered that the availability of the system is 99%. In a field of a cluster virtual machine, the high availability may mean that: when a virtual machine may not run normally due to a problem of related resources of the virtual machine, the system may restore the virtual machine to normal. For example, in case of a hardware failure of a physical computing node (e.g., a disk damage, a CPU or memory failure resulting in downtime, a physical network failure and a power failure), the node may be automatically shut down, and the virtual machine on the node may be restarted on other healthy computing nodes in a cluster.

The inventors have found that a health status of the virtual machine is a key factor to ensure a normal operation of the cloud business. An abnormal operation or a failure in a business environment may have an uncontrollable impact on the normal operation of the business, and may even lead to a paralysis of an entire business function in serious cases. Therefore, it is one of important measures to improve a stability of an entire business system to make a business operation system have a certain ability to deal with an abnormality. The high availability is a common solution to ensure that the system may still provide a normal function in a case of burst abnormality. In a current actual business, the high availability of the virtual machine in which a business core service is located is ensured by using solutions, such as clustering, dual-machine hot standby, etc. However, abnormality handling processes of the above-mentioned two solutions have corresponding drawbacks, for example, an abnormality of a node may increase a running load of other nodes when the cluster is deployed, and the dual-machine hot standby may not cope with a simultaneous failure of a host and a standby.

The high availability of the virtual machine mainly includes an anomaly detection and a fault recovery. At present, the anomaly detection of the virtual machine always relies on a human judgment, or is performed through some simple scripts and commands, which is inefficient, may not detect a fault timely and accurately, and has low timeliness. On the other hand, most of technical researches on the fault recovery at home and abroad focus on ensuring a high availability of the host machine, for example, the high availability of the host machine is implemented by using software such as pacemaker, etc., and the virtual machine on the host machine is migrated to a healthy host machine in time when the host machine is faulty. However, the technologies ignore a fact that the virtual machine may have a problem and need to be rebuilt even if the host machine is healthy. How to accurately determine the health status of the virtual machine and rebuild the faulty virtual machine without affecting the host machine is one of important topics of the technical solution provided by embodiments of the present disclosure.

Before the method provided by embodiments of the present disclosure is described, a brief introduction is made to an OpenStack system. It should be noted that in the section, in order to provide a better understanding of the method provided by embodiments of the present disclosure, the method provided by embodiments of the present disclosure will be described in detail in combination with the OpenStack system. However, the description should not be regarded as a limitation on embodiments of the present disclosure. That is to say, in embodiments of the present disclosure, the method may be implemented based on the OpenStack system. However, embodiments of the present disclosure are not limited to this, and the method may also be implemented based on other virtual machine management systems.

OpenStack is a project for a cloud platform management, which is currently an open source project that provides software for a construction and a management of public, private, and hybrid clouds. A primary task of the Openstack project is to simplify a deployment process of cloud and bring a good scalability thereto. The OpenStack supports virtual machine software or containers such as KVM, Xen, Lvc, Docker, etc.

A main objective of the OpenStack is to manage a resource in a data center and simplify a resource allocation. The OpenStack manages three parts of resources: a computing resource: the OpenStack may plan and manage a large number of virtual machines, so that an enterprise or service provider is allowed to provide the computing resource on demand; a developer may access the computing resource through API to create a cloud application, and an administrator and a user may access the resources through the web; a storage resources: the OpenStack may provide a required object and a block storage resource for a cloud service or a cloud application; because of a demand for a performance and price, many organizations may no longer meet a conventional enterprise-level storage technology, and thus the OpenStack may provide a configurable object storage or block storage function according to user needs; and a network resource: a large number of configuration works exist in the data center, for example, a server, a network device, a storage device and a security device all need to be configured, and they may also be divided into more virtual devices or virtual networks, which may lead to an explosive growth in the number of IP addresses, a routing configuration, and a security rule. In view of this, the OpenStack provides a plug-in, extensible and API-driven network and an IP management function.

The inventors have found through research that since an original intention of the OpenStack is to face a public cloud, the OpenStack lacks a virtual machine high availability design in "gene", which is also the reason why a computing service Nova of the OpenStack has no perfect virtual machine high availability function so far. In a public cloud environment, a high availability of a user business system depends more on an application itself distributed in the cluster, that is, an application running on the public cloud has its own cluster and load balancing system, which may tolerate an unavailability of the virtual machine caused by a breakdown of a physical computing node to a certain extent, and may automatically transfer a load on a faulty computing node through the load balancing system. As more and more users in a conventional IT architecture migrate to cloud computing, the number of private cloud users of the OpenStack is increasing. Since an uninterrupted running of a conventional centralized application system almost completely depends on a high availability of the server, a high availability of a virtual machine of an OpenStack Nova service becomes extremely urgent in a private cloud environment.

For at least one aspect of the above-mentioned problems, embodiments of the present disclosure provide a method of implementing a high availability of a cluster virtual machine, including: detecting a state of at least one virtual machine in a cluster; acquiring, in response to the at least one virtual machine being in an abnormal state, a high availability recovery strategy specific to the at least one virtual machine; and performing a recovery operation on the at least one virtual machine according to the acquired high availability recovery strategy specific to the at least one virtual machine.

In the method according to embodiments of the present disclosure, a recovery strategy for each virtual machine may be configured, and different virtual machines may be recovered differently according to recovery strategies specific to different virtual machines, which may greatly improve the high availability of the cluster virtual machine and ensure a normal operation of an application on the virtual machine.

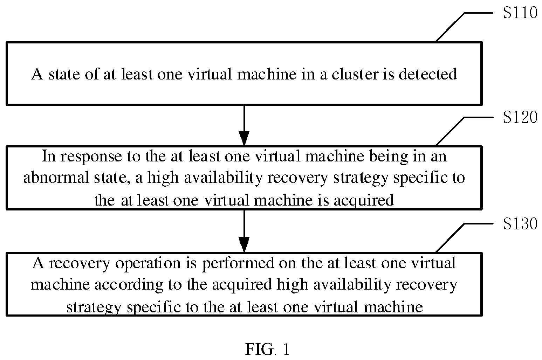

FIG. 1 shows a flowchart of a method of implementing a high availability of cluster virtual machine according to some exemplary embodiments of the present disclosure. Referring to FIG. 1, the method may include operations S 110 to S130.

In operation S 110, a state of at least one virtual machine in a cluster is detected.

In embodiments of the present disclosure, the detecting a state of at least one virtual machine in a cluster includes: regularly detecting, by a timer, the state of the at least one virtual machine in the cluster at a predetermined time interval.

For example, a detection of an OpenStack cluster virtual machine may be triggered by a timer at a regular interval. The timer may use crontable. Crontable is a non-blocking timing trigger. When the timer is triggered, whether a previous round of trigger is completed may not be detected. If the previous round of trigger or a plurality of rounds of triggers are not completed, a plurality of rounds of virtual machine anomaly detections may be performed asynchronously.

In embodiments of the present disclosure, the timer includes a detection parameter, and the detection parameter is used to characterize a detection state, and the detecting a state of at least one virtual machine in a cluster includes: determining whether a previous round of detection is completed according to the detection parameter; suspending, in response to the previous round of detection being not completed, a current round of detection; and starting, in response to the previous round of detection being completed, the current round of detection.

That is to say, in embodiments of the present disclosure, for a problem caused by a non-blocking feature of the crontable, the detection parameter used to characterize the detection state (i.e., whether the detection is completed) is provided. The parameter state may be checked at a beginning of the detection. If the parameter is detected to be in the detection state, it means that the previous round of detection has not been completed, the current round of detection may be stopped. Otherwise, a new round of detection may be started, and the parameter may be set to be in the detection state, and may be set to be in an idle state until the round of detection is completed.

In operation S 120, in response to the at least one virtual machine being in an abnormal state, a high availability recovery strategy specific to the at least one virtual machine is acquired.

For example, the high availability recovery strategy includes at least one of a first high availability recovery strategy and a second high availability recovery strategy, and the first high availability recovery strategy is a restart/start strategy, and the second high availability recovery strategy is a rebuilding strategy.

It should be noted that an expression "restart/start strategy" means a restart or start strategy. A to-be-recovered virtual machine being in a closed state corresponds to the start strategy; and the to-be-recovered virtual machine being in a running state corresponds to the restart strategy.

For example, the OpenStack may provide virtual machine-level operations, that is, operations pf starting, closing, creating, and removing the virtual machine. Based on the above-mentioned operations, at least two recovery operations are provided for the current virtual machine: starting/restarting the virtual machine, and rebuilding the virtual machine after removing an original virtual machine. Different virtual machines may be configured with different high availability recovery strategies according to different actual business. For example, the high availability recovery strategy may include four types of strategies: IGNORE: ignore; RESTART: restart (in a non-closed state)/start (in a closed state) only; REBUILD: rebuild only; ALL: restart/start first and then rebuild after a failure.

In embodiments of the present disclosure, the "RESTART: restart (in a non-closed state)/start (in a closed state) only" may be described as the first high availability recovery strategy, the "REBUILD: rebuild only" may be described as the second high availability recovery strategy, the "ALL: restart/start first and then rebuild after a failure" may be described as a third high availability recovery strategy, and the "IGNORE: ignore" may be described as a fourth high availability recovery strategy.

In operation S130, a recovery operation is performed on the at least one virtual machine according to the acquired high availability recovery strategy specific to the at least one virtual machine.

In embodiments of the present disclosure, the performing, in response to the high availability recovery strategy specific to the at least one virtual machine being the first high availability recovery strategy, the recovery operation on the at least one virtual machine includes: detecting a state of a host machine in which the at least one virtual machine is located; detecting a state of a physical volume in which the at least one virtual machine is located; and restarting or starting, in response to the state of the host machine and the state of the physical volume being normal, the at least one virtual machine.

In embodiments of the present disclosure, the performing, in response to the high availability recovery strategy specific to the at least one virtual machine being the second high availability recovery strategy, the recovery operation on the at least one virtual machine includes: detecting a state of a physical volume in which the at least one virtual machine is located; detecting a state of a host machine in which the at least one virtual machine is located; and rebuilding, in response to the state of the host machine and the state of the physical volume being normal, the at least one virtual machine on the host machine in which the at least one virtual machine is located.

In embodiments of the present disclosure, the high availability recovery strategy further includes a third high availability recovery strategy, and the performing, in response to the high availability recovery strategy specific to the at least one virtual machine being the third high availability recovery strategy, the recovery operation on the at least one virtual machine includes: detecting a state of a host machine in which the at least one virtual machine is located; detecting a state of a physical volume in which the at least one virtual machine is located; restarting or starting, in response to the state of the host machine and the state of the physical volume being normal, the at least one virtual machine; and rebuilding, in response to failing to restart or start the at least one virtual machine failing, the at least one virtual machine on the host machine in which the at least one virtual machine is located.

In embodiments of the present disclosure, the performing, in response to the high availability recovery strategy specific to the at least one virtual machine being the second high availability recovery strategy, the recovery operation on the at least one virtual machine further includes: determining whether the state of at least one virtual machine is restored to normal; and rebuilding, in response to determining that the state of the at least one virtual machine is not restored to normal, the at least one virtual machine on another host machine, wherein the another host machine is in a same available domain as the host machine in which the at least one virtual machine is located.

In embodiments of the present disclosure, the performing, in response to the high availability recovery strategy specific to the at least one virtual machine being the second high availability recovery strategy, the recovery operation on the at least one virtual machine further includes: rebuilding, in response to the state of the host machine in which the at least one virtual machine is located being abnormal, the at least one virtual machine on another host machine, wherein the another host machine is in a same available domain as the host machine in which the at least one virtual machine is located.

In embodiments of the present disclosure, the rebuilding the at least one virtual machine on another host machine includes: sequentially traversing other host machines in the same available domain as the host machine in which the at least one virtual machine is located, until the at least one virtual machine is successfully rebuilt on one of the other host machines in the same available domain.

For example, a business virtual machine uses an OpenStack volume as a startup source of a virtual machine system. A startup volume is likely to be damaged in a case of power failure. A detection of a virtual machine volume needs to be prioritized.

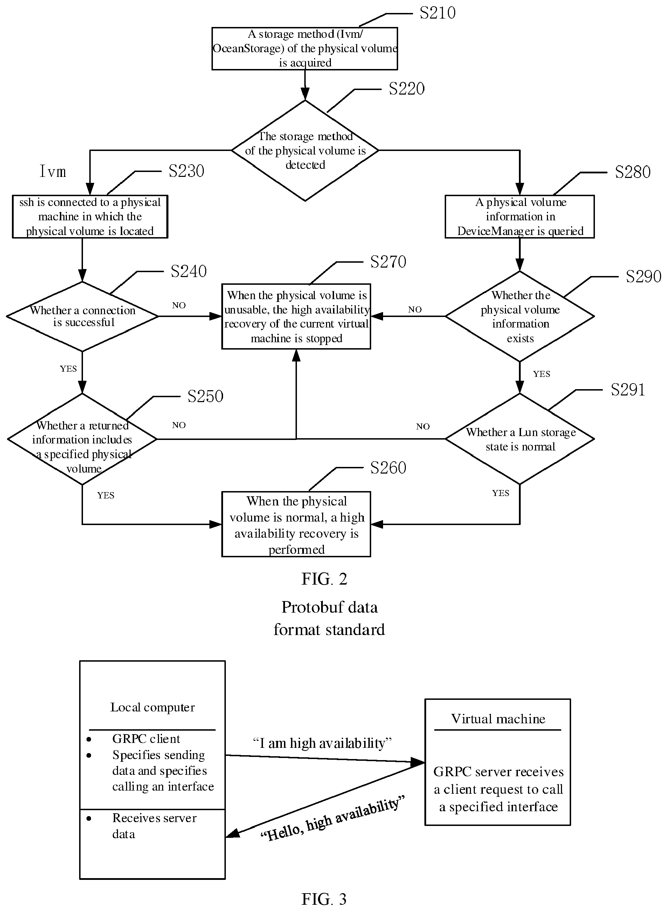

FIG. 2 schematically shows a process of detecting a physical volume in a method according to embodiments of the present disclosure. Referring to FIG. 2, the process of detecting the physical volume may include operations S210 to S291.

In operation S210, a storage method of the physical volume is acquired. For example, the physical volume may be managed by lvm or stored by Huawei OceanStorage according to different test environments.

In operation S220, a branch corresponding to the storage method of the physical volume is optionally entered according to the storage method of the acquired physical volume. When the physical volume is managed by the lvm, a left branch in FIG. 2 may be entered; and when the physical volume is managed by the Huawei OceanStorage storage, a right branch in FIG. 2 may be entered.

In operation S230, when the physical volume is managed by the lvm, a physical machine in which the physical volume is located is connected through ssh.

In operation S240, it is determined whether the physical machine in which the physical volume is located is connected through the ssh.

When the physical machine in which the physical volume is located is connected through the ssh, operation S250 is performed. In operation S250, it is determined whether a returned information includes a specified physical volume.

When the returned information includes the specified physical volume, operation S260 is performed. In operation S260, it is determined that when the physical volume is normal, a high availability recovery may be performed.

When the physical machine in which the physical volume is located is not connected through the ssh or the returned information does not include the specified physical volume, operation S270 is performed. In operation S270, it is determined that when the physical volume is abnormal (unusable), the high availability recovery of the current virtual machine may be stopped.

In operation S280, when the physical volume is managed by the Huawei OceanStorage storage, a physical volume information in DeviceManager is queried.

In operation S290, it is determined whether the physical volume information exists.

When the physical volume information exists, operation S291 is performed. In operation S291, it is determined whether a Lun storage state is normal.

When the Lun storage state is normal, the above-mentioned operation S260 is performed.

When no physical volume information exists or the Lun storage state is abnormal, the above-mentioned operation S270 is performed.

In the embodiments shown in FIG. 2, only when all physical volumes of the virtual machine are available, may the physical volume be determined to be in a normal state, and may a subsequent detection be performed; if the physical volume is detected to be unavailable, the virtual machine may be set in a physical volume abnormal state.

In embodiments of the present disclosure, after performing the recovery operation on the at least one virtual machine, the method may further include a step of determining whether the virtual machine is running normally. For example, it may be determined whether the virtual machine is running normally by using a method that a computer communicates with the virtual machine. FIG. 3 schematically shows a schematic diagram of a communication between a computer and a virtual machine. Referring to FIG. 3, the computer may communicate with a GRPC interface of a built-in service of the virtual machine to detect whether the service in the virtual machine is running normally, so that it may be determined whether the virtual machine is running normally. For example, data may be interacted between a local computer and the virtual machine by using a Protobuf data format standard. The local computer may include a GRPC client. The GRPC client may specify sending data and specify calling an interface, for example, the GRPC client may send "I am high availability" to the virtual machine. The virtual machine may include a GRPC server. The GRPC server may receive a client request to call a specified interface, for example, the GRPC server may send "Hello, high availability" to the client. The client may receive data from the server.

In embodiments of the present disclosure, the method further includes: setting, in response to the state of the physical volume in which the at least one virtual machine is located being abnormal, the at least one virtual machine to be in a volume abnormal state; and performing, in response to the state of the physical volume in which the at least one virtual machine is located being restored from abnormal to normal, the recovery operation on the at least one virtual machine again.

In embodiments of the present disclosure, the method further includes: removing, in response to successfully performing the recovery operation on the at least one virtual machine again, the volume abnormal state of the at least one virtual machine; and setting, in response to failing to perform the recovery operation on the at least one virtual machine again, the at least one virtual machine to be in a volume damage state.

In embodiments of the present disclosure, the performing, in response to the high availability recovery strategy specific to the at least one virtual machine being the first high availability recovery strategy, the recovery operation on the at least one virtual machine further includes: determining whether the state of at least one virtual machine is restored to normal; and updating a high availability task queue according to a result of the determination.

In embodiments of the present disclosure, the high availability queue may include at least three queues: a running task queue, an error task queue, and an ignore task queue. The running task queue includes a queue of virtual machines currently running or waiting to run a high availability recovery operation, the error task queue includes a queue of virtual machines with a failure of a high availability recovery, and the ignore task queue includes a queue of virtual machines with a high availability strategy configured as IGNORE.

In embodiments of the present disclosure, the high availability task queue includes an error task queue, and the error task queue includes a queue of virtual machines with a failure of a high availability recovery, and the updating a high availability task queue according to a result of the determination includes: adding, in response to the state of the at least one virtual machine being not restored to normal, the at least one virtual machine to the error task queue.

In embodiments of the present disclosure, the high availability task queue further includes a running task queue, and the running task queue includes a queue of virtual machines currently running or waiting to run a high availability recovery operation, and the updating a high availability task queue according to a result of the determination includes: removing, in response to the state of the at least one virtual machine being restored to normal, the at least one virtual machine from the running task queue.

In embodiments of the present disclosure, the high availability recovery strategy further includes a fourth high availability recovery strategy, and the fourth high availability recovery strategy is an ignore strategy, and the method further includes: not performing, in response to the high availability recovery strategy specific to the at least one virtual machine being the fourth high availability recovery strategy, the recovery operation on the at least one virtual machine.

In embodiments of the present disclosure, the high availability task queue further includes an ignore task queue, and the ignore task queue includes a queue of virtual machines with the specific high availability recovery strategy configured as the fourth high availability recovery strategy, and the method further includes: before the detecting a state of at least one virtual machine in a cluster, determining whether the at least one virtual machine is in at least one of the running task queue, the error task queue and the ignore task queue. That is, a virtual machine information of the current queue may be queried in advance to determine whether a currently detected virtual machine is in the high availability task queue, so as to ensure that the virtual machine in the queue are not duplicated. In this way, a virtual machine may be prevented from being repeatedly added to the high availability queue, so as to reduce an unnecessary detection process.

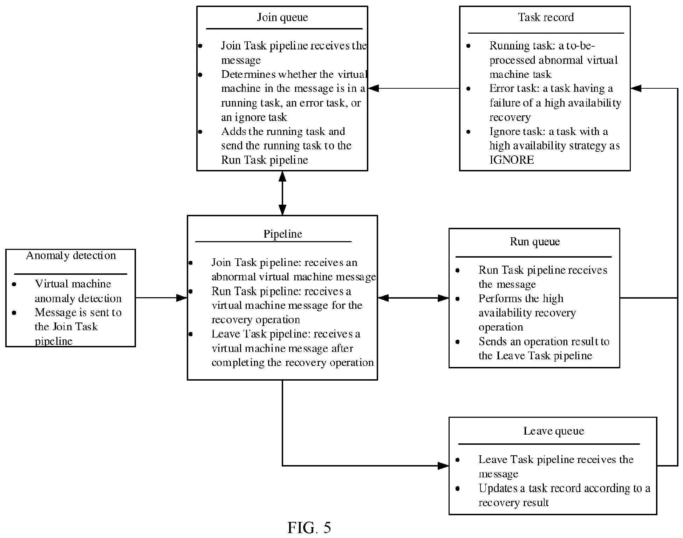

FIG. 5 shows a schematic diagram of a high availability pipeline communication according to some exemplary embodiments of the present disclosure. Referring to FIG. 5, a detected virtual machine is sent to another coroutine through a pipeline for consumption, and a message of an abnormal virtual machine may be consumed when running the coroutine.

In embodiments of the present disclosure, the method further includes: adding, in response to another application existing in the cluster to operate the at least one virtual machine, the at least one virtual machine to a high availability white list, wherein the virtual machine in the high availability white list is temporarily configured as a fourth high availability recovery strategy; and removing, in response to the another application in the cluster completing the operation on the at least one virtual machine, the at least one virtual machine from the high availability white list. Specifically, considering that in addition to the high availability, other self-developed application services in the cluster may also operate the virtual machine in the OpenStack. Therefore, in the embodiment of this disclosure, an additional high availability white list function is added. When other applications manipulate the virtual machine to perform operations such as a startup, a restart, a shutdown, creation, etc., virtual machine data may be added to a high availability white list interface, until the operation is completed and a removal message is sent to the high availability white list (the operation is deemed to be completed after shutting down the virtual machine is started). The white list obtains a temporary IGNORE configuration strategy in the whole process.

For example, referring to FIG. 5, the pipeline may include a Join Task pipeline, a Run Task pipeline, and a Leave Task pipeline. The Join Task pipeline is used to receive an abnormal virtual machine message, the Run Task pipeline is used to receive a virtual machine message for the recovery operation, and the Leave Task pipeline is used to receive a virtual machine message after completing the recovery operation. A message is sent to the Join Task pipeline through a virtual machine anomaly detection. In a join queue, the Join Task pipeline may receive the message, determine whether the virtual machine in the message is in a running task, an error task, or an ignore task, add the running task and send the running task to the Run Task pipeline. In a run queue, the Run Task pipeline may receive the message, perform the high availability recovery operation, and send an operation result to the Leave Task pipeline. In a leave queue, the Leave Task pipeline receives the message and update a task record according to a recovery result. The task record includes a running task, an error task and an ignore task that are recorded. The running task includes a to-be-processed abnormal virtual machine task, the error task includes a task having a failure of a high availability recovery, and the ignore task includes a task with the high availability strategy as IGNORE.

In embodiments of the present disclosure, the method further includes: removing, in response to a duration of an existence of the at least one virtual machine in an error task queue reaching a specified duration, the at least one virtual machine from the error task queue.

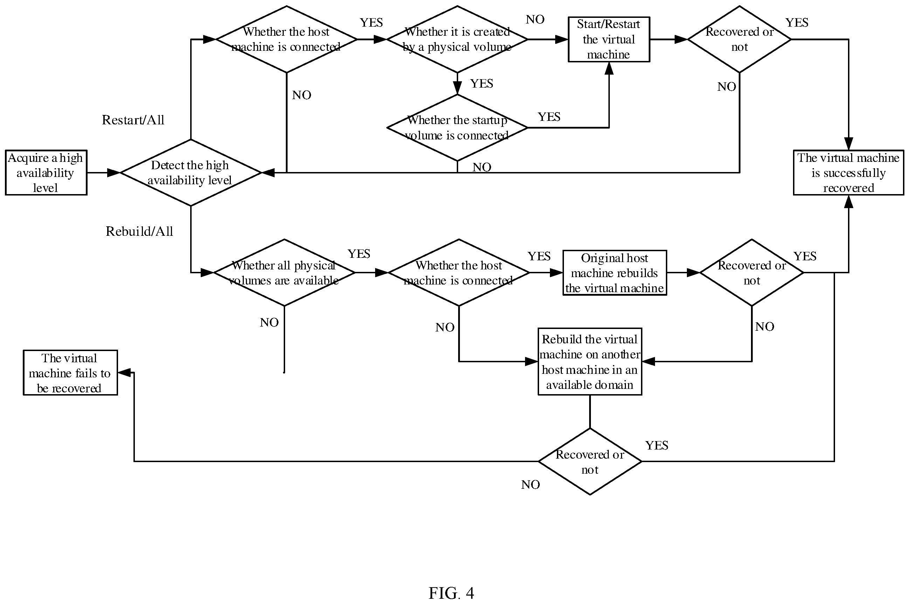

FIG. 4 shows a flowchart of a recovery operation in a method according to some exemplary embodiments of the present disclosure. Referring to FIG. 4, the recovery operation in the method may at least include processes (1) to (4).

(1) A high availability strategy information of the host machine is acquired from a configuration file or a database. A database configuration has a higher priority. According to the high availability strategy, it is decided whether to restart/start (Restart/ALL) or rebuild (rebuild/ALL). Although a current test environment uniformly may create the virtual machine using a physical volume method, the high availability is also compatible with the virtual machine created by a mirroring method.

(2) Restart/start process: A connectivity of the host machine of the virtual machine and an availability of a boot volume may be detected first. If both are available, a start or restart operation may be performed, and a subsequent operation may be performed according to a recovery result

(3) Rebuilding process I: First, an original host machine is rebuilt and it is determined whether the high availability strategy and restart/start are recovered successful, and then it is checked whether the physical volume and the host machine are available. If both the physical volume and the host machine are available, the original virtual machine is first removed on the current host machine, and then a physical volume, a port, and a quota of the original virtual machine are applied to re-create the virtual machine, and then it is determined whether the subsequent operation is performed according to the recovery result.

(4) Rebuilding Process II: If the rebuilding fails on the original host machine, or if the original host machine is unavailable, an attempt may be made to create the virtual machine on another host machine in an available domain of the original host machine. Considering other high availability solutions, such as a dual-machine hot standby virtual machine, the high availability may ensure that the rebuilt virtual machine is not on a same host machine as a host machine or a standby of the original virtual machine. Other valid host machines are sequentially traversed to rebuild the virtual machine until the virtual machine is successfully recovered on a certain host machine or the traversal of the host machine is completed.

In embodiments of the present disclosure, a set of virtual machine high availability systems that may detect both an abnormality of the virtual machine and an abnormality of an internal running system of the virtual machine, and may flexibly cope with different abnormal conditions is proposed according to a detection and a support of the OpenStack for a virtual machine management in a business environment and a monitoring of the Prometheus for a system service in the virtual machine. A virtual machine service level is monitored in real time through a heartbeat access to the GRPC interface in an exporter, and an interface function is ensured to be consistent with a running state of the system through a simplification and an automatic pull-up mechanism of the exporter; different virtual machines may be recovered differently by specifying and managing a recovery strategy for each virtual machine, and a standby virtual machine may be created on any host machine in the cluster, so as to make full use of a cluster resource and improve a stability of a business operation.

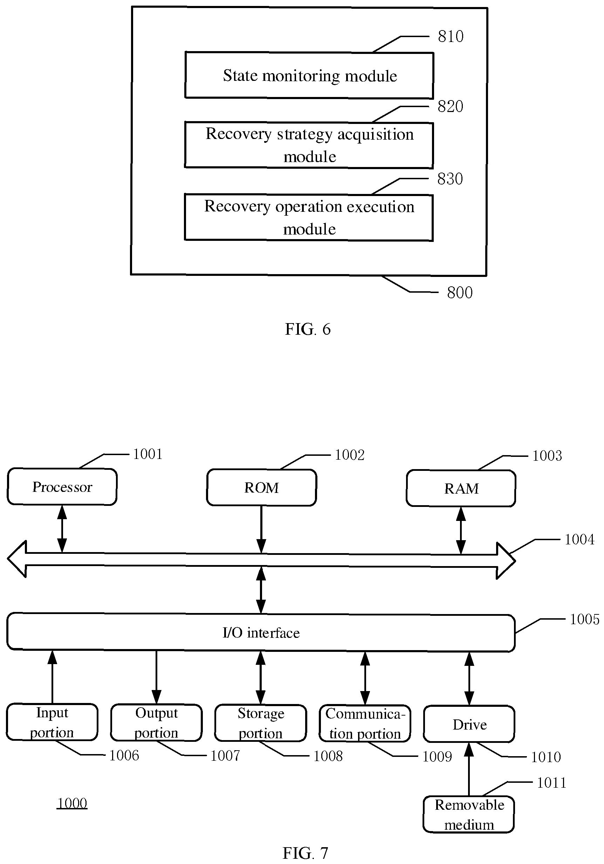

Based on the above-mentioned method of implementing the high availability of the cluster virtual machine, embodiments of the present disclosure further provide an apparatus of implementing a high availability of a cluster virtual machine. The apparatus will be described below in detail with reference to FIG. 6.

FIG. 6 shows a structural block diagram of an apparatus of implementing a high availability of a cluster virtual machine according to exemplary embodiments of the present disclosure.

As shown in FIG. 6, an apparatus 800 of implementing a high availability of a cluster virtual machine includes a state monitoring module 810, a recovery strategy acquisition module 820, and a recovery operation execution module 830.

The state monitoring module 810 is used to detect a state of at least one virtual machine in a cluster. In some exemplary embodiments, the state monitoring module 810 may be used to perform the above-mentioned operation 5110 and a sub-operation thereof, which will not be repeated here.

The recovery strategy acquisition module 820 is used to: acquire, in response to the at least one virtual machine being in an abnormal state, a high availability recovery strategy specific to the at least one virtual machine. In some exemplary embodiments, the recovery strategy acquisition module 820 may be used to perform the above-mentioned operation S 120 and a sub-operation thereof, which will not be repeated here.

The recovery operation execution module 830 is used to: perform a recovery operation on the at least one virtual machine according to the acquired high availability recovery strategy specific to the at least one virtual machine. In some exemplary embodiments, the recovery operation execution module 830 may be used to perform the above-mentioned operation S 130 and a sub-operation thereof, which will not be repeated here.

According to embodiments of the present disclosure, any number of modules in the state monitoring module 810, the recovery strategy acquisition module 820 and the recovery operation execution module 830 included in the apparatus 800 of implementing the high availability of the cluster virtual machine may be combined into a module to be implemented, or any one of the modules may be divided into a plurality of modules. Alternatively, at least some functions of one or more of the modules may be combined with at least some functions of other modules and implemented in a module. According to embodiments of the present disclosure, at least one of the state monitoring module 810, the recovery strategy acquisition module 820 and the recovery operation execution module 830 may be implemented at least partially as a hardware circuit, such as a field programmable gate array (FPGA), a programmable logic array (PLA), a system on chip, a system on substrate, a system on package, and an application specific integrated circuit (ASIC), or may be implemented by a hardware or firmware such as any other reasonable method of integrating or packaging the circuit, or may be implemented by any one or any combinations of the three implementation methods of software, hardware and firmware. Alternatively, at least one of the state monitoring module 810, the recovery strategy acquisition module 820 and the recovery operation execution module 830 may be at least partially implemented as a computer program module. The computer program module, when run, may perform corresponding functions.

FIG. 7 schematically shows a structural block diagram of an electronic device suitable for implementing the above-mentioned method according to exemplary embodiments of the present disclosure.

As shown in FIG. 7, an electronic device 1000 according to embodiments of the present disclosure includes a processor 1001, which may perform various appropriate actions and processes according to a program stored in a read-only memory (ROM) 1002 or a program loaded into a random access memory (RAM) 1003 from a storage portion 1008. The processor 1001 may include, for example, a general-purpose microprocessor (e.g., a CPU), an instruction provided processor and/or a related chipset and/or a dedicated-purpose microprocessor (e.g., an application specific integrated circuit (ASIC)), etc. The processor 1001 may further include an on-board memory for caching purposes. The processor 1001 may include a single processing unit or a plurality of processing units for performing different actions of the method flow according to embodiments of the present disclosure.

The RAM 1003 stores various programs and data required for an operation of electronic device 1000. The processor 1001, the ROM 1002 and the RAM 1003 are connected to each other through a bus 1004. The processor 1001 performs various operations of the method flow according to embodiments of the present disclosure by executing a program in the ROM 1002 and/or the RAM 1003. It should be noted that the program may also be stored in one or more memories other than the ROM 1002 and the RAM 1003. The processor 1001 may also perform various operations of the method flow according to embodiments of the present disclosure by executing programs stored in the one or more memories.

According to embodiments of the present disclosure, the electronic device 1000 may further include an input/output (I/O) interface 1005, and the input/output (I/O) interface 1005 is also connected to the bus 1004. The electronic device 1000 may further include one or more of following components connected to the I/O interface 1005, including: an input portion 1006 including a keyboard, a mouse, etc.; an output portion 1007 including a cathode ray tube (CRT), a liquid crystal display (LCD), etc., and a speaker, etc.; a storage portion 1008 including a hard disk, etc.; and a communication portion 1009 including a network interface card such as a LAN card, a modem, etc. The communication portion 1009 performs a communication processing via a network such as the Internet. A drive 1010 is also connected to the I/O interface 1005 as required. A removable medium 1011, such as a magnetic disk, an optical disk, a magneto-optical disk, a semiconductor memory, or the like, is installed on the drive 1010 as required, so that a computer program read therefrom may be installed into the storage portion 1008 as required.

The present disclosure further provides a computer-readable storage medium. The computer-readable storage medium may be included in the device/apparatus/system described in the above-mentioned embodiments; the computer-readable storage medium may also exist alone without being assembled into the device/apparatus/system. The above-mentioned computer-readable storage medium carries one or more programs. The above-mentioned one or more programs, when executed, may implement the method according to embodiments of the present disclosure.

According to embodiments of the present disclosure, the computer-readable storage medium may be a non-volatile computer-readable storage medium. For example, the non-volatile computer-readable storage medium includes, but is not limited to: a portable computer disk, a hard disk, a random access memory (RAM), a read-only memory (ROM), an erasable programmable read-only memory (EPROM or a flash memory), a portable compact disk read-only memory (CD-ROM), an optical storage element, a magnetic storage element, or any suitable combination thereof. In the present disclosure, the computer-readable storage medium may be any tangible medium containing or storing a program, and the program may be used by or in combination with an instruction execution system, apparatus or element. For example, according to embodiments of the present disclosure, the computer-readable storage medium may include one or more memories other than the ROM 1002 and/or the RAM 1003 and/or the ROM 1002 and the RAM 1003 described above.

Embodiments of the present disclosure further provide a computer program product, including a computer program. The computer program includes a program code for performing the method shown in the flowchart. When the computer program product runs in a computer system, the program code is used to cause the computer system to implement the method provided by embodiments of the present disclosure.

The above-mentioned functions defined in the system/apparatus of embodiments of the present disclosure are performed when the computer program is executed by the processor 1001. According to embodiments of the present disclosure, the system, the apparatuses, the modules, the units, etc. described above may be implemented by the computer program module.

In an embodiment, the computer program may rely on a tangible storage medium such as an optical storage element, a magnetic memory element, etc. In another embodiment, the computer program may also be transmitted and distributed in a form of a signal on a network medium, downloaded and installed through the communication portion 1009, and/or installed from the removable medium 1011. The program code contained in the computer program may be transmitted by any suitable network medium, including but not limited to: wireless, wired, etc., or any suitable combination thereof.

In the embodiments, the computer program may be downloaded and installed from the network through the communication portion 1009, and/or installed from the removable medium 1011. The computer program, when executed by the processor 1001, performs the above-mentioned functions defined in the system of embodiments of the present disclosure. According to embodiments of the present disclosure, the system, the apparatuses, devices, the modules, the units, etc. described above may be implemented by the computer program module.

According to embodiments of the present disclosure, the program code for executing the computer programs provided by embodiments of the present disclosure may be written in any combination of one or more programming languages. Specifically, the computing programs may be implemented using a high-level procedure and/or an object-oriented programming language, and/or an assembly/machine language. The programming language includes, but is not limited to Java, C++, python, "C" language or a similar programming language. The program code may be completely executed on a user computing device, partially executed on a user device, partially executed on a remote computing device, or completely executed on the remote computing device or a server. In a case of involving the remote computing device, the remote computing device may be connected to the user computing device through any kind of network, including a local area network (LAN) or a wide area network (WAN), or may be connected to an external computing device (for example, connected through the Internet using an Internet service provider).

The flowcharts and block diagrams in the accompanying drawings illustrate possibly implemented architectures, functions and operations of the systems, methods and computer program products according to various embodiments of the present disclosure. In this regard, each block in the flowcharts or block diagrams may represent a module, a program segment, or part of a code. The above-mentioned module, program segment, or part of the code contains one or more executable instructions for realizing specified logic functions. It should also be noted that in some alternative implementations, functions marked in the blocks may also occur in a different order from those marked in the accompanying drawings. For example, two consecutive blocks may actually be performed in parallel, and sometimes they may be performed in a reverse order, which depends on the functions involved. It should also be noted that each block in the block diagrams or flowcharts and a combination of blocks in the block diagrams or flowcharts may be implemented by a dedicated hardware-based system that performs specified functions or operations, or by a combination of a dedicated hardware and computer instructions.

Those skilled in the art will appreciate that various combinations and/or incorporations of features recited in various embodiments and/or claims of the present disclosure may be made, even if such combinations or incorporations are not explicitly recited in the present disclosure. In particular, without departing from the spirit and principles of the present disclosure, various combinations and/or incorporations of the features recited in the various embodiments and/or claims of the present disclosure may be made. All of the combinations and/or incorporations fall within the scope of the present disclosure.

Embodiments of the present disclosure have been described above. However, these embodiments are for illustrative purposes only, and are not used to limit the scope of the present disclosure. Although various embodiments have been described separately above, this does not mean that the measures in various embodiments may not be used advantageously in combination. The scope of the present disclosure is defined by the appended claims and their equivalents. Without departing from the spirit and principles of the present disclosure, those skilled in the art may make various alternatives and equivalent substitutions, and these alternatives and modifications should all fall within the scope of the present disclosure.

## Claims

1. A method of implementing a high availability of a cluster virtual machine, comprising:
detecting (S 110) a state of at least one virtual machine in a cluster;
acquiring (S120), in response to the at least one virtual machine being in an abnormal state, a high availability recovery strategy specific to the at least one virtual machine; and
performing (S130) a recovery operation on the at least one virtual machine according to the acquired high availability recovery strategy specific to the at least one virtual machine.

2. The method according to claim 1, wherein the high availability recovery strategy comprises at least one of a first high availability recovery strategy and a second high availability recovery strategy, and
the first high availability recovery strategy is a restart/start strategy, and the second high availability recovery strategy is a rebuilding strategy.

3. The method according to claim 2, wherein the performing, in response to the high availability recovery strategy specific to the at least one virtual machine being the first high availability recovery strategy, the recovery operation on the at least one virtual machine comprises:
detecting a state of a host machine in which the at least one virtual machine is located;
detecting a state of a physical volume in which the at least one virtual machine is located; and
restarting or starting, in response to the state of the host machine and the state of the physical volume being normal, the at least one virtual machine.

4. The method according to claim 2 or 3, wherein the performing, in response to the high availability recovery strategy specific to the at least one virtual machine being the second high availability recovery strategy, the recovery operation on the at least one virtual machine comprises:
detecting a state of a physical volume in which the at least one virtual machine is located;
detecting a state of a host machine in which the at least one virtual machine is located; and
rebuilding, in response to the state of the host machine and the state of the physical volume being normal, the at least one virtual machine on the host machine in which the at least one virtual machine is located.

5. The method according to claim 4, wherein the high availability recovery strategy further comprises a third high availability recovery strategy, and the performing, in response to the high availability recovery strategy specific to the at least one virtual machine being the third high availability recovery strategy, the recovery operation on the at least one virtual machine comprises:
detecting a state of a host machine in which the at least one virtual machine is located;
detecting a state of a physical volume in which the at least one virtual machine is located;
restarting or starting, in response to the state of the host machine and the state of the physical volume being normal, the at least one virtual machine; and
rebuilding, in response to failing to restart or start the at least one virtual machine failing, the at least one virtual machine on the host machine in which the at least one virtual machine is located.

6. The method according to claim 4, wherein the performing, in response to the high availability recovery strategy specific to the at least one virtual machine being the second high availability recovery strategy, the recovery operation on the at least one virtual machine further comprises:
determining whether the state of at least one virtual machine is restored to normal; and
rebuilding, in response to determining that the state of the at least one virtual machine is not restored to normal, the at least one virtual machine on another host machine, wherein the another host machine is in a same available domain as the host machine in which the at least one virtual machine is located.

7. The method according to claim 4, wherein the performing, in response to the high availability recovery strategy specific to the at least one virtual machine being the second high availability recovery strategy, the recovery operation on the at least one virtual machine further comprises:
rebuilding, in response to the state of the host machine in which the at least one virtual machine is located being abnormal, the at least one virtual machine on another host machine, wherein the another host machine is in a same available domain as the host machine in which the at least one virtual machine is located,
wherein the rebuilding the at least one virtual machine on another host machine comprises:
sequentially traversing other host machines in the same available domain as the host machine in which the at least one virtual machine is located, until the at least one virtual machine is successfully rebuilt on one of the other host machines in the same available domain.

8. The method according to claim 4, wherein the performing, in response to the high availability recovery strategy specific to the at least one virtual machine being the first high availability recovery strategy, the recovery operation on the at least one virtual machine further comprises:
determining whether the state of at least one virtual machine is restored to normal; and
updating a high availability task queue according to a result of the determination,
wherein the high availability task queue comprises an error task queue, and the error task queue comprises a queue of virtual machines with a failure of a high availability recovery, and
the updating a high availability task queue according to a result of the determination comprises:
adding, in response to the state of the at least one virtual machine being not restored to normal, the at least one virtual machine to the error task queue,
wherein the high availability task queue further comprises a running task queue, and the running task queue comprises a queue of virtual machines currently running or waiting to run a high availability recovery operation, and
the updating a high availability task queue according to a result of the determination comprises:
removing, in response to the state of the at least one virtual machine being restored to normal, the at least one virtual machine from the running task queue,
wherein the high availability recovery strategy further comprises a fourth high availability recovery strategy, and the fourth high availability recovery strategy is an ignore strategy, and
the method further comprises:
not performing, in response to the high availability recovery strategy specific to the at least one virtual machine being the fourth high availability recovery strategy, the recovery operation on the at least one virtual machine,
wherein the high availability task queue further comprises an ignore task queue, and the ignore task queue comprises a queue of virtual machines with the specific high availability recovery strategy configured as the fourth high availability recovery strategy, and
the method further comprises: before the detecting a state of at least one virtual machine in a cluster,
determining whether the at least one virtual machine is in at least one of the running task queue, the error task queue and the ignore task queue.

9. The method according to any one of claims 1 to 3, wherein the detecting a state of at least one virtual machine in a cluster comprises:
regularly detecting, by a timer, the state of the at least one virtual machine in the cluster at a predetermined time interval,
wherein the timer comprises a detection parameter, and the detection parameter is configured to characterize a detection state, and
the detecting a state of at least one virtual machine in a cluster comprises:
determining whether a previous round of detection is completed according to the detection parameter;
suspending, in response to the previous round of detection being not completed, a current round of detection; and
starting, in response to the previous round of detection being completed, the current round of detection.

10. The method according to any one of claims 1 to 3, wherein the method further comprises:
adding, in response to another application existing in the cluster to operate the at least one virtual machine, the at least one virtual machine to a high availability white list, wherein the virtual machine in the high availability white list is temporarily configured as a fourth high availability recovery strategy; and
removing, in response to the another application in the cluster completing the operation on the at least one virtual machine, the at least one virtual machine from the high availability white list,
wherein the method further comprises:
removing, in response to a duration of an existence of the at least one virtual machine in an error task queue reaching a specified duration, the at least one virtual machine from the error task queue,
wherein the method is implemented based on OpenStack.

11. The method according to any one of claims 1 to 3, wherein the method further comprises:
setting, in response to a state of a physical volume in which the at least one virtual machine is located being abnormal, the at least one virtual machine to be in a volume abnormal state; and
performing, in response to a state of a physical volume in which the at least one virtual machine is located being restored from abnormal to normal, the recovery operation on the at least one virtual machine again,
wherein the method further comprises:
removing, in response to successfully performing the recovery operation on the at least one virtual machine again, the volume abnormal state of the at least one virtual machine; and
setting, in response to failing to perform the recovery operation on the at least one virtual machine again, the at least one virtual machine to be in a volume damage state.

12. An apparatus (800) of implementing a high availability of a cluster virtual machine, comprising:
a state monitoring module (810) configured to detect a state of at least one virtual machine in a cluster;
a recovery strategy acquisition module (820) configured to: acquire, in response to the at least one virtual machine being in an abnormal state, a high availability recovery strategy specific to the at least one virtual machine; and
a recovery operation execution module (830) configured to: perform a recovery operation on the at least one virtual machine according to the acquired high availability recovery strategy specific to the at least one virtual machine.

13. An electronic device, comprising:
one or more processors; and
a storage apparatus configured to store one or more programs,
wherein the one or more programs, when executed by the one or more processors, are configured to cause the one or more processors to implement the method according to any one of claims 1 to 11.

14. A computer-readable storage medium having executable instructions thereon, wherein the instructions, when executed by a processor, are configured to cause the processor to implement the method according to any one of claims 1 to 11.

15. A computer program product comprising a computer program, wherein the computer program, when executed by a processor, is configured to cause the processor to implement the method according to any one of claims 1 to 11.
